# EUROPEAN PATENT SPECIFICATION

(11) **EP 4 348 185 B1**
(45) Date of publication and mention of the grant of the patent: **06.05.2026**
(21) Application number: 22816537.9
(22) Date of filing: 01.06.2022
(51) Int. Cl.: G01C 21/34, B60W 40/12, B60W 40/105, B60W 40/06

(54) **GENERATING AN ADJUSTMENT ENERGY-EFFICIENT TRACK FOR A VEHICLE**
ERZEUGUNG EINER EINSTELLUNGSENERGIEEFFIZIENTEN SPUR FÜR EIN FAHRZEUG
GÉNÉRATION D'UNE VOIE DE RÉGLAGE EFFICACE DU POINT DE VUE ÉNERGÉTIQUE POUR UN VÉHICULE

(30) Priority: 01.06.2021 RU 2021115767
(43) Date of publication of application: 10.04.2024
(73) Proprietor: Pankov, Boris Valerevich, 03540 Alicante (ES)
(72) Inventor: Pankov, Boris Valerevich, 03540 Alicante (ES)
(74) Representative: Pribic, Jelena
(86) International application number: PCT/RU2022/050176
(87) International publication number: WO 2022/255911

(56) References cited:
- RU-C2- 2 407 060
- US-B2- 10 274 332
- US-B2- 10 309 793
- US-B2- 8 290 648
- KULIK EGOR, TRAN XUAN TRUNG, ANUCHIN ALECKSEY: "Estimation of the requirements for hybrid electric powertrain based on analysis of vehicle trajectory using GPS and accelerometer data", INTERNATIONAL WORKSHOP ON ELECTRIC DRIVES: OPTIMIZATION IN CONTROL OF ELECTRIC DRIVES (IWED, 31 January 2018 (2018-01-31), Moscow, Russia, pages 1 - 5, XP033332405
- ASAMER JOHANNES; GRASER ANITA; HEILMANN BERNHARD; RUTHMAIR MARIO: "Sensitivity analysis for energy demand estimation of electric vehicles", TRANSPORTATION RESEARCH PART D 46, vol. 46, 4 November 2016 (2016-11-04), pages 182 - 199, XP029546540, Retrieved from the Internet <URL:https://www.sciencedirect.com/science/article/pii/S13619209153002507via%3Dihub> [retrieved on 20220928]
- BECKERS CAMIEL J.J . ET AL.: "Assessing the impact of cornering losses on the energy consumption of electric city buses", TRANSPORTATION RESEARCH PART D 86, 7 July 2020 (2020-07-07), pages 1 - 15, XP093014032, DOI: https:// doi.org/10.1016/j.trd.2020.102360
- ULLAH IRFAN, LIU KAI, YAMAMOTO TOSHIYUKI, ZAHID MUHAMMAD, JAMAL ARSHAD: "Electricvehicleenergyconsumptionpredictionusingstacked generalization: an ensemble learning approach", INTERNATIONAL JOURNAL OF GREEN ENERGY, 26 February 2021 (2021-02-26), pages 896 - 909, XP093014033, DOI: https://doi.org/10.1080/15435075.2021.1881902

## Description

### FIELD OF INVENTION

The proposed invention relates to methods for controlling energy consumption by a motor vehicle, and can be used in transportation industry.

### BACKGROUND OF THE INVENTION

There is a known method for evaluating the fuel efficiency of a motor vehicle disclosed in patent KR101526431B1, published on 06.05.2015 on 12 sheets (D1). The method of D1 is implemented by a device for evaluating the fuel efficiency of a motor vehicle, the device comprising: a data collection unit that collects data on driving, as well status and identification data of a plurality of motor vehicles, including the first motor vehicle; a driving index calculator that calculates driving indexes of each motor vehicle based on their driving data; a means for extracting an analogous group that extracts a group of motor vehicles, which are similar to the first motor vehicle, from a plurality of motor vehicles, based on their driving indexes and status data; a means for fuel efficiency evaluation that evaluates the fuel efficiency of the first motor vehicle based on its driving data and identification data in the analogous group; and a means for controlling a motor vehicle that controls the method of steering the motor vehicle or the method for improving the driving of the first motor vehicle, based on the fuel efficiency evaluation. According to the invention, the fuel efficiency of a motor vehicle can be evaluated with precision taking into account driver's habits and the current condition of the vehicle. In addition, the method of steering the motor vehicle and the driving mode based on the assessment of the vehicle's fuel are provided to the driver, so that he/she can improve his/her driving efficiency and the efficiency of steering the motor vehicle, as well as reduce the cost of vehicle maintenance.

The method disclosed in D1 does not use the information on the specific portion of the route that was covered by the first motor vehicle, which reduces the accuracy of fuel consumption estimation. In addition, the method disclosed in D1 uses the information obtained from motor vehicles with similar specifications and similar driving mode only, which prevents the method from being used in a global fuel consumption control system comprising multiple motor vehicles with different specifications. In addition, the method disclosed in D1 is used to identify operational problems of motor vehicles that affect the fuel consumption levels and require certain vehicle parts to be repaired or replaced, and so this method cannot be used to change the motor vehicle driving mode in order to reduce the energy consumption on a given portion of the route. In addition, the solution disclosed in D1 does not propose any method to return the motor vehicle to energy-efficient motion after an emergency or unexpected stop, or any other deviation from energy-efficient motion. The method disclosed in D1 can be considered the closest prior art to the claimed invention.

Document US 10 309 793 B describes A method for controlling a vehicle and the determination of an energy efficient track.

### SUMMARY OF THE INVENTION

The technical problem to be solved by the claimed invention is to provide a method, a device and a computer-readable medium that do not possess the drawbacks of the prior art and thus make it possible to generate an accurate adjustment energy-efficient track for a motor vehicle that allows to reduce energy consumption by the motor vehicle on the specific portion of the route, as well as to return the vehicle in operation, after an emergency and/or unexpected stop, back to moving in accordance with the main energy-efficient track.

The objective of the claimed invention is to overcome the drawbacks of the prior art and thus to reduce energy consumption by the motor vehicle on the specific portion of the route.

The objective of the present invention is achieved by a method according to claim 1, by a device according to claim 7 and by a medium according to claim 9.

### BRIEF DESCRIPTION OF THE DRAWINGS

Exemplary embodiments of the present invention are described in further detail below with references made to the attached drawings, included herein by reference:
Fig. 1 illustrates an exemplary, non-limiting, diagram for the method 100 for generating an energy-efficient track for the motor vehicle.
Fig. 2 illustrates an exemplary, non-limiting, diagram for the step 101 of generating an estimated track for the first motor vehicle.
Fig. 3 illustrates an exemplary, non-limiting, diagram for the step 102 of adjusting the estimated track for the first motor vehicle.
Fig. 4 illustrates an exemplary, non-limiting, diagram for the step 103 of evaluating the passing of a portion of the route by the first motor vehicle.
Fig. 5 illustrates an exemplary, non-limiting, diagram for the step 104 of generating an estimated track for the second motor vehicle.
Fig. 6 illustrates an exemplary, non-limiting, diagram for the step 105 of adjusting the estimated track for the second motor vehicle.
Fig. 7 illustrates an exemplary, non-limiting, diagram for the step 106 of evaluating the passing of a portion of the route by the second motor vehicle.
Fig. 8 illustrates an exemplary, non-limiting, diagram for the system 200 for generating an energy-efficient track for the motor vehicle.
Fig. 9 illustrates an exemplary, non-limiting, diagram for the method 300 for generating an adjustment energy-efficient track for the vehicle in operation.

### DETAILED DESCRIPTION OF THE INVENTION

Alternative embodiments of the present invention are provided below. This disclosure is in no way limiting to the scope of protection granted by the present patent. Rather, it should be noted that the claimed invention can be implemented in different ways, so as to include different components and conditions, or combinations thereof, which are similar to the components and conditions disclosed herein, in combination with other existing and future technologies.

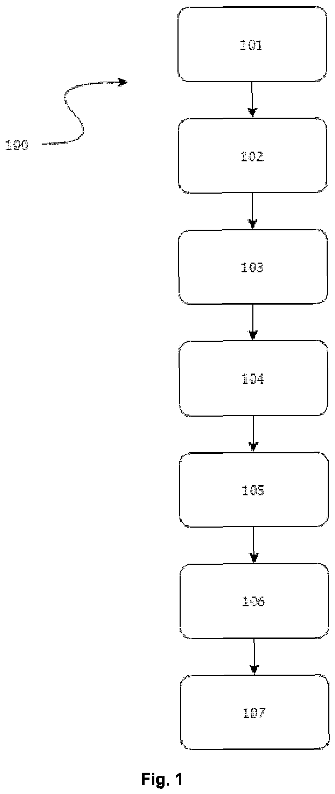

Fig. 1 illustrates an exemplary, non-limiting, diagram for the method 100 for generating an energy-efficient track for the motor vehicle. Preferably, but not limited to, the method 100 comprises the following steps: an optional step 101 of forming an estimated track for the first motor vehicle; an optional step 102 of adjusting the estimated track for the first motor vehicle; a step 103 of evaluating the passing of a portion of the route by the first motor vehicle; a step 104 of forming an estimated track for the vehicle in operation; an optional step 105 of adjusting the estimated track for the vehicle in operation; an optional step 106 of evaluating the passing of a portion of the route by the vehicle in operation; an optional step 107 of generating a track database. Preferably, but not limited to, the motor vehicle is any conventional motor vehicle, such as, but not limited to, a wheeled vehicle or a tracked vehicle, wherein the vehicle has to comprise at least one engine that consumes energy to actuate at least one moving device of the vehicle, such as, but not limited to, the wheels. The energy consumed by the engine is, for example, but not limited to, the energy produced by burning a fuel (in case the motor vehicle is equipped with an internal combustion engine), by electricity (in case the motor vehicle is equipped with an electric motor), or by a combination thereof (in case the motor vehicle is a hybrid vehicle). The first motor vehicle is a motor vehicle that passes the portion of the route first. The vehicle in operation is a motor vehicle that passes portion of the route later than the first motor vehicle. While some of the methods disclosed below are intended to be implemented as part of the motion control system of the vehicle in operation, or in connection thereto, it should be obvious to a person having ordinary skill in the art that the disclosed methods may also be implemented as part of systems or devices that are not connected to the vehicle in operation or are indirectly connected to it, as well as in computer simulations. Preferably, but not limited to, the motor vehicles are controlled via a corresponding motor vehicle control system that comprises a set of interconnected units and components configured so that the motor vehicle can be controlled by an operator, i.e. a driver, an autonomous control system, a remote user, or a remote control system, in order to drive the motor vehicle, to stop its movement, to change the direction of its movement, to change its speed, etc. Motor vehicle control systems are widely known, and therefore are not described any further, however, preferably, but not limited to, the claimed motor vehicle control system has to comprise a speed control element of the motor vehicle, the component being one of the following or any suitable combination thereof: an accelerator pedal of the vehicle in operation, a brake pedal of the vehicle in operation, a retarder of the vehicle in operation, an intarder of the vehicle in operation, a compression brake of the vehicle in operation, a decompression brake of the vehicle in operation, or a gearbox of the vehicle in operation. Preferably, but not limited to, these elements, as well as other components of the motion control system should be equipped with a variety of sensors (such as, but not limited to, contact and contactless position sensors, encoders, induction sensors, magnetoresistive sensors, volumetric flow meters, capacitive sensors, oxygen sensors, nitrogen oxide sensors, temperature sensors, pressure sensors, knock sensors, oil level sensors, light level sensors, rain sensors, as well as various environmental sensors, such as, but not limited to, radars, lidars, cameras, global positioning sensors, odometry sensors, gyrostabilizers) allowing to read the state of each component at any given moment in time, to locate the motor vehicle at any given moment in time, and to read its technical status and other parameters at any given moment in time. Preferably, but not limited to, the sensors have to be adapted to digital data output. These sensors, as well as the methods for obtaining useful information from them, are widely known in the art, and therefore are not described in further detail. Preferably, but not limited to, the motor vehicle control system further comprises any kind of electronic devices capable of computation, such as a vehicle dashboard; a device for projecting visual information onto the windshield of the motor vehicle; a device for projecting visual information onto a head-up display (HUD); a head unit; a user device, also a wearable user device, for receiving and transmitting data (e.g. a transceiver), and for producing a GUI (e.g. a dashboard display); a display of the device for projecting visual information onto the windshield of the motor vehicle; a HUD of the device for projecting visual information onto a head-up display (HUD); a display of the head unit; a display of the user device, also a HUD of the wearable user device; a device for producing audio signals (e.g. speakers). Preferably, but not limited to, the electronic devices capable of computation comprise at least a CPU and a memory that stores the program code that, when implemented, induces the CPU to perform the steps according to some method performed by the CPU. For example, but not limited to, the CPU and memory may be the main CPU and memory of the motor vehicle control system implemented as a central controller. Preferably, but not limited to, the vehicle dashboard comprises the aforementioned CPU and memory, and/or communicates with the aforementioned central controller. Preferably, but not limited to, the device for projecting visual information onto the windshield of the motor vehicle comprises the aforementioned CPU and memory, and/or communicates with the aforementioned central controller. Preferably, but not limited to, the device for projecting visual information onto a HUD comprises the aforementioned CPU and memory, and/or communicates with the aforementioned central controller. Preferably, but not limited to, the head unit of the motor vehicle comprises the aforementioned CPU and memory, and/or communicates with the aforementioned central controller. Preferably, but not limited to, the user device communicates with the motor vehicle control system via conventional data exchange protocols and comprises the aforementioned CPU and memory, and/or communicates with the aforementioned central controller via conventional data exchange protocols. For example, but not limited to, the user device may be represented by a smartphone, a PDA, a tablet, a netbook, a laptop, etc. For example, but not limited to, the user device may be represented by a wearable user device, such as, for instance, a wearable display device as disclosed by the patent US10176783B2 or a similar one. When the user device is a wearable user device, it should be preferably, but not limited to, equipped by a HUD capable of displaying visual information. Preferably, but not limited to, the aforementioned dashboard, head unit, and the device for projecting visual information onto the windshield of the motor vehicle should comprise a corresponding display capable of visual information output, or be somehow connected to such display. Preferably, but not limited to, the aforementioned device for projecting visual information onto a HUD should comprise a corresponding HUD capable of visual information output, or be somehow connected to such display. Preferably, but not limited to, the computer devices mentioned in the present disclosure are generally any suitable computer devices that comprise at least a CPU and a memory, particularly, but not limited to, the claimed electronic devices capable of computation, the user device and the server of the system for generating an adjustment energy-efficient track for the vehicle in operation. Preferably, but not limited to, the control system of the motor vehicle may be connected via a transceiver with the user device, the server of the system for generating the adjustment energy-efficient track, other servers and control systems of other motor vehicles, but not limited to. Preferably, but not limited to, the generated estimated and/or energy-efficient tracks for each motor vehicle can be used to generate a control signal to control the movement of the corresponding motor vehicle, and/or used to generate an information signal to inform a human operator that it is necessary to change the movement of the corresponding motor vehicle.

Preferably, but not limited to, the portion of the route is a portion of the route with special properties. A route is, but not limited to, a strip of land adapted to be passable by motor vehicles, wherein the route may comprise, but not limited to, a road, a junction, an intersection, etc. A road may be, but not limited to, a paved road or a dirt road. Preferably, but not limited to, the special properties of the portion of the route may comprise at least one of the following: the geometry of the portion of the route, the road grade of the portion of the route, the allowed speed on the portion of the route, the quality of road surface of the portion of the route, speed limits on the portion of the route, turns on the portion of the route, weather conditions on the portion of the route at the moment it is passed by a motor vehicle, the infrastructure of the portion of the road, or a combination thereof. For example, but not limited to, the special properties of the portion of the route may be marked by acceleration points and/or deceleration points. In addition, but not limited to, a deceleration point may be a point on the portion of the route, in which the momentum of the motor vehicle is sufficient to cover the distance to an acceleration point on the portion of the route. In addition, but not limited to, a deceleration point may be a point on the portion of the route, in which the motor vehicle has to be given negative or zero acceleration in order to smoothly reach the acceleration point, wherein the negative acceleration may be such that the motor vehicle has zero momentum at the acceleration point. In addition, but not limited to, an acceleration point may be a point on the portion of the route, in which the motor vehicle continues to move with negative acceleration. In addition, but not limited to, an acceleration point may be a point on the portion of the route, in which the motor vehicle has zero momentum. For example, but not limited to, a portion of the route may comprise a road with a slope and an upslope that follows it, wherein the beginning of the slope may be marked by a deceleration point, and an acceleration point may be placed within the upslope.

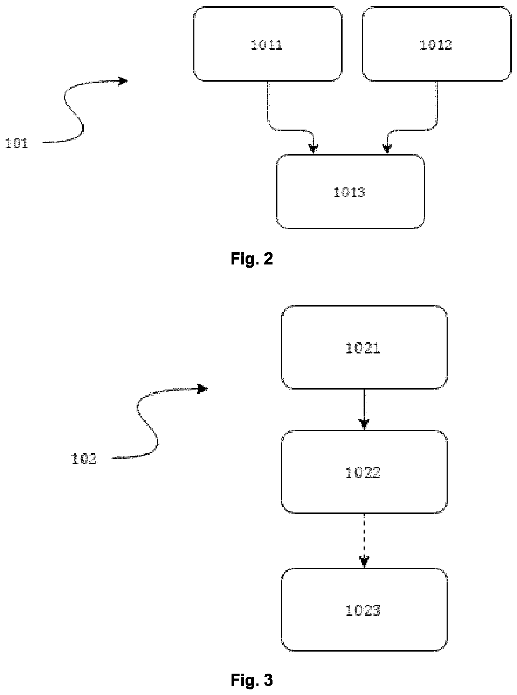

As shown in Fig. 2, the optional step 101 of generating an estimated track for the first motor vehicle, for example, but not limited to, comprises the following steps: a step 1011 of identifying the first motor vehicle; a step 1012 of identifying the portion of the route; and a step 1013 of generating an estimated track for the first motor vehicle. For example, but not limited to, the step 1011 involves determining the first motor vehicle and the data associated with it. Such data may include, for example, but not limited to, at least one of the following: the type and model of the first motor vehicle, its mass, its aerodynamic characteristics, its wheel formula, its estimated and/or actual energy consumption and data from its acceleration sensors and/or speed sensors, data from its positioning sensors, weight sensors, and wheel speed sensors, and/or a combination thereof. In general, it should be noted that such data may be used to generate an estimated speed profile of the first motor vehicle on a given portion of the route. The step 1011 further involves determining the location of the first motor vehicle relative to the portion of the route that is identified in the step 1012. In addition, for example, but not limited to, the step 1012 involves determining the first portion of the route along the direction of movement of the first motor vehicle, relative to its location. The step 1012 further involves determining the special properties of the portion of the route, which are data associated with the portion of the route to be passed by the first motor vehicle. In general, it should be noted that the data about the special properties of the portion of the route may be used to generate an estimated speed profile of the first motor vehicle on this portion of the route. In addition, for example, but not limited to, the step 1013 involves generating an estimated track for the first motor vehicle on the portion of the route using the data associated with the first motor vehicle and the data associated with the portion of the route to be passed by the first motor vehicle. Therefore, the generated estimated track for the first motor vehicle contains both the data associated with the first motor vehicle and the data associated with the portion of the route to be passed by the first motor vehicle. Preferably, but not limited to, the generated estimated track for the first motor vehicle further contains the estimated speed profile of the first motor vehicle, which, in turn, contains at least estimated locations of the first motor vehicle on the portion of the route and estimated speeds of the first motor vehicle on the portion of the route associated with said estimated locations. The estimated speed profile of the first motor vehicle further contains, but not limited to, estimated states of the speed control element of the first motor vehicle, which is one of the following: the accelerator pedal of the first motor vehicle, its brake pedal, its retarder, its intarder, its compression brake, decompression brake, its gearbox, or a combination thereof; wherein the state of the speed control element, according to the present disclosure, comprises the positions of the moving parts of the corresponding control element in its active state, i.e. relative to the state, in which the corresponding element is not activated, and/or any other active state of the element, and/or any other non-active state of the element; and wherein the estimated states of the control element are also associated with the corresponding estimated location of the motor vehicle on the portion of the route. Subsequently, the first motor vehicle moves along the given portion of the route in accordance with the estimated track for the first motor vehicle, wherein it is assumed that the estimated track is energy efficient. A motor vehicle track can be considered energy efficient in case both the time spent by the motor vehicle to pass the portion of the route and the energy consumed by the motor vehicle to pass the portion of the route are minimal. However, it should be obvious to a person having ordinary skill in the art that the estimated track for the first motor vehicle, generated in step 101, may be also generated using alternative ways.

As shown in Fig. 3, the optional step 102 of adjusting the estimated track for the first motor vehicle, for example, but not limited to, comprises the following steps: a step 1021 of determining the actual speed profile of the first motor vehicle in at least one of the moments when it passes the portion of the route; a step 1022 of comparing the actual speed profile with the corresponding estimated speed profile from the estimated track for the first motor vehicle; and, if necessary, a step 1023 of adjusting the actual speed profile in response to the results of said comparison. For example, but not limited to, the step 1021 involves determining the location of the first motor vehicle on the portion of the route, together with at least a single wheel speed of the first motor vehicle in the specified moment in time. In addition, for example, but not limited to, the step 1022 involves determining the estimated wheel speed of at least a single wheel of the first motor vehicle in the specified moment in time, as well as matching the actual wheel speed and the estimated wheel speed. In addition, for example, but not limited to, in case the actual wheel speed differs from the estimated wheel speed, an energy consumption control signal is generated for the first motor vehicle in step 1023. This energy consumption control signal, for example, but not limited to, contains a control signal for the motion control system of the first motor vehicle, which changes the operation of the engine, and/or the brake system, and/or other technical components of the first motor vehicle, so that the actual wheel speed matches the estimated wheel speed in the specified moment in time. However, it should be obvious to a person having ordinary skill in the art that although the adjustment of the estimated track for the first motor vehicle enhances the accuracy of the subsequent generation of the energy-efficient track for the vehicle in operation thus allowing to reduce energy consumption by the vehicle in operation on a specific portion of the route, said adjustment is optional, since the actual track of the first motor vehicle, which is generated according to the method described below, may be sufficient for generating an accurate energy-efficient track for the vehicle in operation.

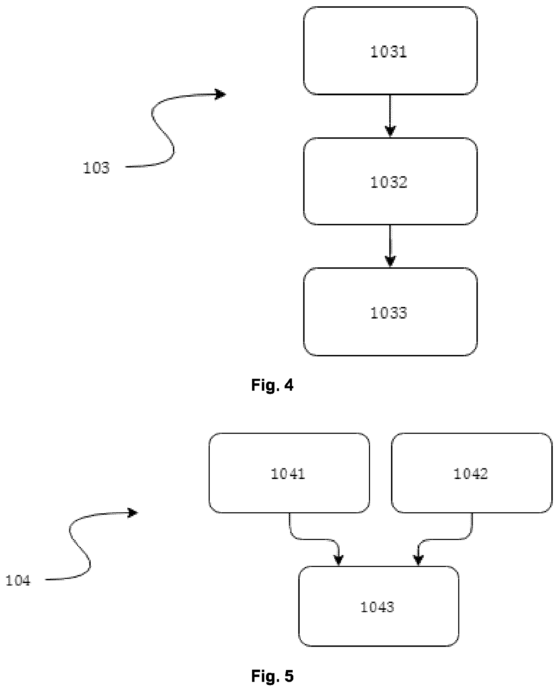

As shown in Fig. 4, the step 103 of evaluating the passing of a portion of the route by the first motor vehicle, which is also a step of collecting secondary data, comprises, but not limited to, the following steps: a step 1031 of collecting secondary data associated with the first motor vehicle and/or secondary data associated with the portion of the route passed by the first motor vehicle; a step 1032 of generating a track for the first motor vehicle; and a step 1033 of evaluating energy efficiency of the track of the first motor vehicle. For example, but not limited to, the step 1031 of collecting secondary data involves determining the fact of passing the portion of the route by the first motor vehicle, for example, but not limited to, based on the location of the first motor vehicle relative to the boundaries of the portion of the route, as well as (optionally) refining the data associated with the first motor vehicle and/or the portion of the route. In general, it should be noted that, in this step, the actual data associated with the first motor vehicle and/or the portion of the route it has passed are collected. In general, it should be noted that such data may be used to generate the actual track of the first motor vehicle, based on how it passed a given portion of the route. It should also be noted that refined data associated with the first motor vehicle and/or the portion of the route can be used to evaluate energy efficiency of the track generated for the first motor vehicle. In addition, for example, but not limited to, the step 1032 is the same as the step 1012, apart from the fact that the secondary data collected in step 1031 can be used to generate a track for the first motor vehicle along with the primary data associated with the first motor vehicle and/or the portion of the route. Thus, the actual track for the first motor vehicle generated in step 1032 also contains the actual data associated with the first motor vehicle, including, but not limited to, the actual speed profile of the first motor vehicle on the portion of the route and the actual data associated with the portion of the route. In addition, but not limited to, the actual speed profile of the first motor vehicle contains, but not limited to, actual locations of the first motor vehicle on the portion of the route and its actual speeds on the portion of the route that are associated with its actual locations on the portion of the route, as well as actual states of the speed control elements of the first motor vehicle, which are also associated with its actual locations on the portion of the route. In addition, for example, but not limited to, the step 1033 involves evaluating energy efficiency of the track generated for the first motor vehicle. In general, it should be noted that the track generated for the first motor vehicle will be considered energy efficient in case both the time spent by the first motor vehicle to pass the portion of the route and the energy consumed by the first motor vehicle to pass the portion of the route are minimal. Thus, it should be noted that, in step 1033, energy efficiency of the estimated track for the first motor vehicle is compared to that of the track generated for the first motor vehicle. It should also be noted that in case the track generated for the first motor vehicle is more energy-efficient than the estimated track for the first motor vehicle, then the estimated track for the vehicle in operation is generated using the generated (actual) track, even if it is different from the estimated track for the first motor vehicle. Otherwise, it should be noted that the estimated track for the vehicle in operation is also generated based on the actual track for the first motor vehicle, taking into account the secondary data associated with the first motor vehicle and/or the portion of the route passed by it. In addition, the estimated track for the first motor vehicle can also be adjusted based on how the first motor vehicle passed the given portion of the route, using the refined data associated with the first motor vehicle and/or the portion of the route. In this case, energy efficiency of the adjusted estimated track for the first motor vehicle is evaluated. In general, it should be noted that the estimated track to be generated for the vehicle in operation has to be energy efficient, and it has to be generated taking into account the properties of the actual track of the first motor vehicle. However, it should be obvious to a person having ordinary skill in the art that the estimated track for the first motor vehicle, as was mentioned above, can be any estimated track for the first motor vehicle that contains the data associated with the first motor vehicle and the data associated with the portion of the route to be passed by the first motor vehicle, including, but not limited to, the estimated track for the first motor vehicle that was adjusted in step 102.

As will be demonstrated below, the steps of generating estimated and/or energy-efficient tracks for the vehicle in operation, as well as for any of the following motor vehicles to pass the portion of the route after the first motor vehicle, are essentially the same and may be interchangeable. For example, without limitation, generation of estimated and/or energy-efficient tracks for the vehicle in operation will be demonstrated, however, as was mentioned above, it should be obvious to a person having ordinary skill in the art that the aforementioned methods can be used to generate corresponding tracks for any motor vehicle that is to pass the given portion of the route after the first motor vehicle. As shown in Fig. 5, the step 104 of generating an estimated track for the vehicle in operation comprises the following steps: a step 1041 of identification the first motor vehicle; a step 1042 of identifying the portion of the route; and a step 1043 of generating an estimated track for the first motor vehicle. For example, but not limited to, the step 1041 is the same as the step 1011, apart from the fact that the collected data associated with the vehicle in operation are not the data associated with the first motor vehicle. In addition, for example, but not limited to, depending on the collected data associated with the vehicle in operation, an additional adjustment coefficient, or any other normalization methods may be used, in case the data associated with the vehicle in operation differ from any of the data associated with the first motor vehicle. In addition, for example, but not limited to, in the same step, the data of the portion of the route may also be refined, in case they can be refined without using the data from the track for the first motor vehicle, such as, but not limited to, weather data associated with the portion of the route, which will be relevant at the moment the vehicle in operation passes the given portion of the route, as well as infrastructure data of the portion of the route. In general, it should be noted that the first motor vehicle and the vehicle in operation are different, and therefore energy efficiency of their tracks on a given portion of the route should also be evaluated differently, preferably, but not limited to, in the way of adjusting their values relative to the normalized values. In addition, for example, but not limited to, the step 1042 is the same as the step 1012, apart from the fact that, when collecting the data associated with the portion of the route, the refined data associated with the portion of the route from the track generated for the first motor vehicle are also collected. In general, it should be noted that, in step 1042, the collected data associated with the portion of the route will be more accurate than the similar data from the estimated track for the first motor vehicle. In addition, for example, but not limited to, the step 1043 is the same as the step 1013, apart from the fact that the data from the track generated for the first motor vehicle are collected (and, optionally, normalized) along with the data associated with the first motor vehicle and/or the portion of the route, which are also collected and, optionally, normalized. In general, it should be noted that, in step 1043, there is generated an estimated track for the vehicle in operation that takes into account both the properties of the portion of the route or the characteristics of the vehicle in operation and how the first motor vehicle passed the portion of the route. Preferably, but not limited to, the generated estimated track for the vehicle in operation further contains the estimated speed profile of the vehicle in operation, which, in turn, contains at least estimated locations of the vehicle in operation on the portion of the route and estimated speeds of the vehicle in operation on the portion of the route associated with said estimated locations. The estimated speed profile of the vehicle in operation further contains, but not limited to, estimated states of the speed control element of the an optional step 107 of generating a track database., which is one of the following: the accelerator pedal of the vehicle in operation, its brake pedal, its retarder, its intarder, its compression brake, decompression brake, its gearbox, or a combination thereof; wherein the state of the speed control element, according to the present disclosure, comprises the positions of the moving parts of the corresponding control element in its active state, i.e. relative to the state, in which the corresponding element is not activated, and/or any other active state of the element, and/or any other non-active state of the element; and wherein the estimated states of the control element are also associated with the corresponding estimated location of the motor vehicle on the portion of the route. In addition, but not limited to, as was shown above, the speed profile of the vehicle in operation may be normalized according to the data associated with the first motor vehicle. In addition, but not limited to, the speed profile of the vehicle in operation can be adjusted in advance based on the actual speed profile of the first motor vehicle, depending on the refined data associated with the portion of the route. More specifically, but not limited to, in step 1013, the properties of the portion of the route could not be considered with sufficient accuracy, since there were no actual data associated with the portion of the route, such as, but not limited to, the quality of pavement or temporary obstacles, and due to that fact the estimated track for the first motor vehicle could not possibly be energy efficient. In general, it should be noted that the estimated track for the first motor vehicle was generated using the data provided by the motor vehicle itself and external data sources only. However, but not limited to, based on how the first motor vehicle passed the given portion of the route, the track generated for the first motor vehicle can be significantly different from the estimated track for the first motor vehicle, for example, because the operator or the motion control system of the first motor vehicle were constantly assessing the situation on the portion of the route, which allowed the vehicle to pass it with higher energy efficiency than that of the estimated track, including by means of adjusting the estimated track. Thus, the estimated track generated for the vehicle in operation has by any means, not necessarily due to normalization, higher energy efficiency than the estimated track for the first motor vehicle. As will be shown below in the present disclosure, it is the estimated track generated for the vehicle in operation that becomes the pre-generated energy-efficient track for the vehicle in operation.

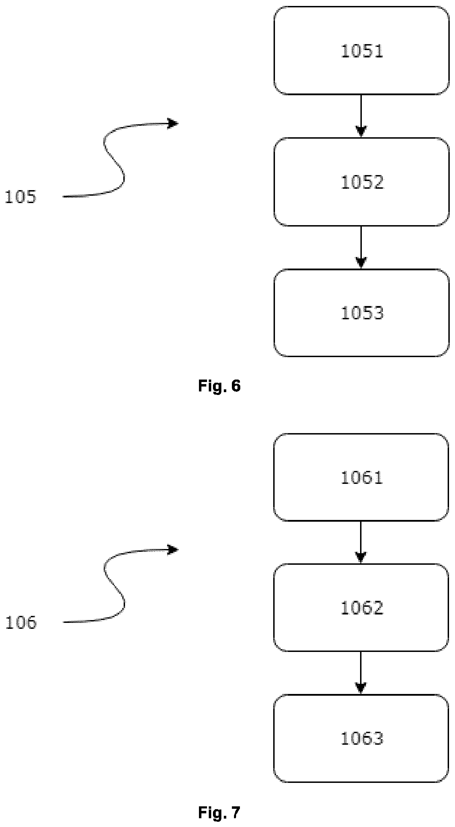

As shown in Fig. 6, the optional step 105 of adjusting the estimated track for the vehicle in operation, for example, but not limited to, comprises the following steps: a step 1051 of determining the actual speed profile of the vehicle in operation in at least one of the moments when it passes the portion of the route; a step 1052 of comparing the actual speed profile with the corresponding estimated speed profile from the estimated track for the vehicle in operation; and, if necessary, a step 1053 of adjusting the actual speed profile in response of the vehicle in operation to the results of said comparison. For example, but not limited to, the step 1051 involves determining the location of the vehicle in operation on the portion of the route, together with at least a single wheel speed of the second motor vehicle in the specified moment in time. In addition, for example, but not limited to, the step 1052 involves determining the estimated wheel speed of at least a single wheel of the vehicle in operation in the specified moment in time, as well as matching the actual wheel speed and the estimated wheel speed. In addition, for example, but not limited to, in case the actual wheel speed differs from the estimated wheel speed, an energy consumption control signal is generated for the second motor vehicle in step 1053. This energy consumption control signal, for example, but not limited to, contains a control signal for the motion control system of the second motor vehicle, which changes the operation of the engine, and/or the brake system, and/or other technical components of the second motor vehicle, so that the actual wheel speed matches the estimated wheel speed in the specified moment in time. However, it should be obvious to a person having ordinary skill in the art that although the adjustment of the estimated track for the vehicle in operation enhances the accuracy of the subsequent generation of the energy-efficient track for the following motor vehicles thus allowing to reduce energy consumption by the following motor vehicles on a specific portion of the route, said adjustment is optional, since the step 103 described above may be sufficient for generating accurate energy-efficient tracks for the following motor vehicles.

As shown in Fig. 7, the optional step 106 of evaluating the passing of a portion of the route by the vehicle in operation involves, for example, but not limited to, the following steps: a step 1061 of collecting secondary data associated with the vehicle in operation and/or secondary data associated with the portion of the route passed by the vehicle in operation; a step 1062 of generating an actual track for the vehicle in operation; and a step 1063 of evaluating energy efficiency of the track of the vehicle in operation. For example, but not limited to, the step 1061 of collecting secondary data involves determining the fact of passing the portion of the route by the vehicle in operation, for example, but not limited to, based on the location of the vehicle in operation relative to the boundaries of the portion of the route and/or relative to the location of the first motor vehicle at the moment of determining the fact of passing, as well as (optionally) refining the data associated with the vehicle in operation and/or the portion of the route. In general, it should be noted that, in this step, the actual data associated with the vehicle in operation and/or the portion of the route it has passed are collected. In general, it should be noted that such data may be used to generate the actual track of the vehicle in operation, based on how it passed a given portion of the route. It should also be noted that refined data associated with the vehicle in operation and/or the portion of the route can be used to evaluate energy efficiency of the actual track generated for the vehicle in operation. In addition, for example, but not limited to, the step 1062 is the same as the step 1032, apart from the fact that the secondary data collected in step 1061 can be used to generate the actual track for the vehicle in operation along with the primary data associated with the first motor vehicle and/or the portion of the route, and along with the secondary data collected in step 1032. Thus, the actual track for the vehicle in operation generated in step 1062 also contains the actual data associated with the vehicle in operation, including the actual speed profile of the vehicle in operation on the portion of the route and the actual data associated with the portion of the route, wherein these data may optionally be normalized relative to the data collected in step 1032. In addition, for example, but not limited to, the step 1063 involves evaluating energy efficiency of the track generated for the vehicle in operation. In general, it should be noted that the track generated for the vehicle in operation will be considered energy efficient in case both the time spent by the vehicle in operation to pass the portion of the route and the energy consumed by the vehicle in operation to pass the portion of the route are minimal. Thus, it should be noted that, in step 1063, energy efficiency of the estimated track for the vehicle in operation is compared to that of the actual track generated for the vehicle in operation. It should also be noted that in case the actual track for the vehicle in operation is more energy-efficient than the estimated track for the vehicle in operation, then the estimated track for any of the following motor vehicles is generated using the generated (actual) track for the vehicle in operation, even if it is different from the estimated track for the first motor vehicle, wherein the following motor vehicle is any motor vehicle that is to pass the given portion of the route after the vehicle in operation. Otherwise, it should be noted that the estimated track for the following motor vehicle is also generated based on the actual track for the vehicle in operation, taking into account the secondary data associated with the vehicle in operation and/or the portion of the route passed by it. In addition, the estimated track for the vehicle in operation can also be adjusted based on how the vehicle in operation passed the given portion of the route, using the refined data associated with the vehicle in operation and/or the portion of the route. In this case, energy efficiency of the adjusted estimated track for the vehicle in operation is evaluated. In general, it should be noted that the estimated track to be generated for the following motor vehicle has to be energy efficient, and it has to be generated taking into account the properties of the actual track of the vehicle in operation. However, it should be obvious to a person having ordinary skill in the art that although the evaluation of how the vehicle in operation passes a given portion of the route enhances the accuracy of the subsequent generation of the energy-efficient tracks for the following motor vehicles thus allowing to reduce energy consumption by these motor vehicles on a specific portion of the route, said evaluation is optional, since the aforementioned estimated track for the vehicle in operation, or even the aforementioned estimated track for the first motor vehicle, may be sufficient for subsequent generation of a model energy-efficient track for any of the following motor vehicles.

The optional step 107 of generating a track database involves, for example, but not limited to, collecting a plurality of tracks of motor vehicles generated based on how these motor vehicles, i.e., at least the first motor vehicle and the vehicle in operation, passed the portion of the route. For example, but not limited to, in step 107, the plurality of tracks of motor vehicles that have passed the portion of the route are collected. In addition, for example, but not limited to, in step 107, the collected tracks are systematized, so that these data can be used to generate a plurality of estimated tracks for the following motor vehicles. In addition, but not limited to, the plurality of such tracks can be used as an input for analysis, including by machine learning tools, in order to generate the most energy-efficient (model) track that would be suitable for any motor vehicle. Such model track can be unique for each motor vehicle and can subsequently be used as the estimated track for the first motor vehicle, whereupon the steps according to the method for generating an energy-efficient track will be performed again in order to generate a different model track for the same motor vehicle. In addition, but not limited to, such data can be used to change the properties of the portion of the route so as to ensure the generation of the most energy-efficient model track. However, it should be obvious to a person having ordinary skill in the art that although the forming of the track database enhances the accuracy of the subsequent generation of the energy-efficient tracks for the following motor vehicles thus allowing to reduce energy consumption by these motor vehicles on a specific portion of the route, said evaluation is optional, since the aforementioned estimated track for the vehicle in operation, or even the aforementioned estimated track for the first motor vehicle, may be sufficient for subsequent generation of model energy-efficient tracks for the following motor vehicles.

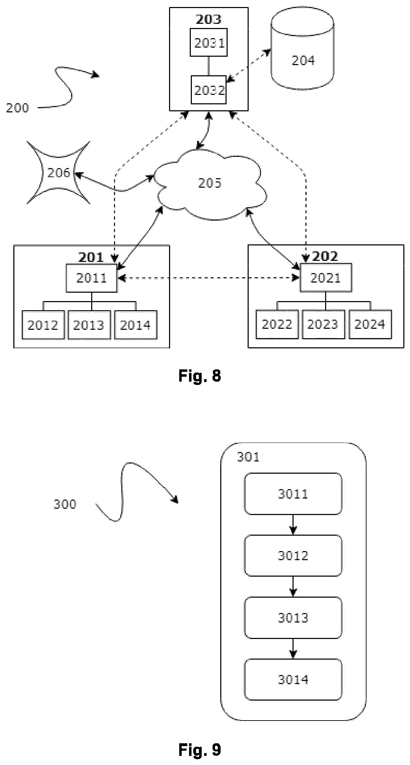

Fig. 8 illustrates an exemplary, non-limiting, diagram for the system 200 for generating an energy-efficient track for the motor vehicle. For example, but not limited to, the claimed system 200 comprises the server 203 that communicates at least with the aforementioned transceivers 2011, 2021 of the first motor vehicle 201 and the vehicle in operation 202, respectively. In addition, but not limited to, the server 203 is a computer device comprising at least a CPU 2031 and a memory 2032. In addition, but not limited to, the memory (computer-readable medium) of the server 203 contains the program code that, when implemented, induces the CPU to perform the steps according to the method for generating an energy-efficient track for the motor vehicle that was described above with reference to Figs. 1-7, as well as the steps according to the method 300 that will be described in further detail below with reference to Fig. 9. For example, but not limited to, the computer-readable medium (memory 2031) may comprise a non-volatile memory (NVRAM); a random-access memory (RAM); a read-only memory (ROM); an electrically erasable programmable read-only memory (EEPROM); a flash drive or other memory technologies; a CD-ROM, a digital versatile disk (DVD) or other optical/holographic media; magnetic tapes, magnetic film, a hard disk drive or any other magnetic drive; and any other medium capable of storing and encoding the necessary information. In addition, but not limited to, the memory 2032 comprises a computer-readable medium based on the computer memory, either volatile or non-volatile, or a combination thereof. In addition, but not limited to, exemplary hardware devices include solid-state drives, hard disk drives, optical disk drives, etc. In addition, but not limited to, the computer-readable medium (memory 2032) is not a temporary memory (i.e., a permanent, non-transitive memory), and therefore it does not contain a temporary (transitive) signal. In addition, but not limited to, the memory 2032 may store an exemplary environment, wherein the procedure of generating an energy-efficient track for the motor vehicle may be implemented using computer-readable commands or codes that are stored in the memory of the server. In addition, but not limited to, the server 203 comprises one or more CPUs 2031 which are designed to execute computer-readable commands or codes that are stored in the memory 2032 of the device in order to implement the procedure of generating an energy-efficient track for the motor vehicle. In addition, but not limited to, the system 200 may further comprise a database 204. The database 204 may be, but not limited to, a hierarchical database, a network database, a relational database, an object database, an object-oriented database, an object-relational database, a spatial database, a combination of two or more said databases, etc. In addition, but not limited to, the database 204 stores the data to be analyzed in the memory 2032 or in the memory of a different computer device that communicates with the server 203, which may be, but not limited to, a memory that is similar to any of the memories 2032, as described above, and which can be accessed via the server 203. In addition, but not limited to, the database 204 stores the data comprising at least commands to perform the steps according to the method 100 as described above, as well as the steps according to the method 300 that will be described in further detail below; the processed data associated with the first motor vehicle and/or the vehicle in operation, and/or the portion of the route, including refined data; estimated and generated tracks for motor vehicles; navigational data; model tracks for motor vehicles; etc. In addition, but not limited to, the exemplary system 200 further comprises, respectively, at least the first vehicle 201 and the vehicle in operation 202. Such vehicles 201, 202 usually comprise corresponding transceivers 2011, 2021 adapted to sending the data to the server 203 that communicates with motion control systems 2012, 2022 of respective vehicles and/or with on-board information systems 2013, 2023 (if present) of respective vehicles. Optionally, but not limited to, such motor vehicles may comprise various sensors 2014, 2024 to collect data that are associated with the corresponding motor vehicle in operation, and/or the portion of the route. In addition, but not limited to, the such sensors 2014, 2024 include a positioning sensor, speed sensors (such as, but not limited to, a crankshaft position sensor, a camshaft position sensor, a throttle position sensor, an accelerator pedal position sensor, a wheel speed sensor, a power consumption sensor, e.g. injection rate or current voltage characteristic), energy consumption sensors (such as, but not limited to, fuel level sensors, battery sensors, an accelerator pedal position sensor, injection rate sensor, and an RPM sensor), temperature sensors (such as, but not limited to, a coolant temperature sensor, an ambient temperature sensor, an in-car temperature sensor), pressure sensors (such as, but not limited to, an intake manifold pressure sensor, a fuel injection pressure sensor, a tyre pressure sensor), environmental sensors (such as, but not limited to, a light level sensor, a rain sensor, a radar, a lidar, a video camera, a sonar), and sensors and speed control elements of the motor vehicle, as well as other elements of the motion control system of the motor vehicle. In addition, but not limited to, there is provided a server 203, which, in addition to the functions mentioned above, stores and facilitates the execution of computer-readable commands and codes disclosed herein, which, accordingly, will not be described again. In addition, but not limited to, the server 203, in addition to the functions mentioned above, is capable of controlling the data exchange in the system 200. In addition, but not limited to, data exchange within the system 200 is performed with the help of one or more data exchange networks 205. In addition, but not limited to, data exchange networks 205 may include, but not limited to, one or more local area networks (LAN) and/or wide area networks (WAN), or may be represented by the Internet or Intranet, or a virtual private network (VPN), or a combination thereof, etc. In addition, but not limited to, the server 203 is further capable of providing a virtual computer environment for the components of the system to interact with each other. In addition, but not limited to, the network 205 provides interaction between transceivers 2011, 2021 on motor vehicles 201, 202, the server 203, and the database 204 (optionally). In addition, but not limited to, the server 203 and the database 204 may be connected directly using conventional wired or wireless communication means and methods, which, accordingly, are not described in further detail. In addition, but not limited to, the system 200 may optionally comprise infrastructure elements 206 of the portion of the route, specifically, various technical means capable of collecting the aforementioned data that are associated with motor vehicles and/or the portion of the route, and optionally can provide the aforementioned network 205 for data exchange on the portion of the route. For example, but not limited to, such elements 206 include a weather station, a speed monitoring camera, an infrastructural transceiver of the portion of the route, pavement weight sensors, etc., as well as the data from other motor vehicles that may or may not be involved with the system 200, the data transferred and propagated in data exchange environments based on data exchange technologies, such as vehicle-to-vehicle (V2V) and vehicle-to-everything (V2X). In addition, but not limited to, one of the aforementioned on-board information systems 2013, 2023, in case it is represented by a computer device comprising a CPU and a memory that are similar to the CPU 2031 and the memory 2032, as well as any other suitable computer device, such as, but not limited to, a computer device of any of the motion control systems 2012, 2022, may be represented by the aforementioned server 203 with its basic functions, wherein the aforementioned transceivers 2011, 2012 may be connected to each other by using any data exchange network or directly, via wireless communication, such as, but not limited to, radio communication, acoustic communication, infrared communication, laser communication, etc., wherein the database 204 may be implemented directly within the memory of one of the on-board information systems 2013 or 2023 (if present).

The methods, devices, and systems disclosed herein with reference to Figs. 1-8 also provide, but are not limited to, generation of the main energy-efficient track for the vehicle in operation. Preferably, but not limited to, such main energy-efficient track for the vehicle in operation is generated to ensure that the vehicle in operation's movement is energy efficient over a longer portion of the route, for example, but not limited to, over a longer portion of the route on a highway. However, it should be obvious to a person having ordinary skill in the art that, if necessary, such main energy-efficient track for the vehicle in operation can be generated for any other suitable portion of the route. In addition, as shown in Fig. 9, there may be provided the claimed method 300 for generating an adjustment energy-efficient track for the vehicle in operation. Preferably, but not limited to, such method 300 for generating an adjustment energy-efficient track for the vehicle in operation comprises at least the following steps: a step 301 of generating an energy-efficient track for the vehicle in operation, wherein the adjustment energy-efficient track is generated based on the main energy-efficient track for the vehicle in operation, wherein the main energy-efficient track for the vehicle in operation contains at least an estimated speed profile of the vehicle in operation on the portion of the route, for which the main energy-efficient track for the vehicle in operation was generated, and wherein the estimated speed profile of the vehicle in operation on the portion of the route, for which the main energy-efficient track for the vehicle in operation was generated, contains at least the first preferred speed range for the vehicle in operation on the portion of the route, for which the main energy-efficient track for the vehicle in operation was generated; and wherein the step 301 of generating an adjustment energy-efficient track comprises at least the following steps: a step of 3011 determining the current location of the vehicle in operation, wherein the current location of the vehicle in operation does not correspond to its estimated location on the portion of the route; a step 3012 of determining an adjustment portion of the route, wherein its start coordinates match the current location of the vehicle in operation and its end coordinates match the start coordinates of the portion of the route, for which the main energy-efficient track for the vehicle in operation was generated, and wherein the start coordinates of the portion of the route, for which the main energy-efficient track for the vehicle in operation was generated, are located in the vehicle in operation's direction of movement; a step 3013 of collecting primary adjustment data, which involves obtaining data associated with the vehicle in operation and data associated with the adjustment portion of the route; and a step 3014 of generating an adjustment energy-efficient track for the vehicle in operation, wherein the adjustment energy-efficient track for the vehicle in operation contains at least an estimated speed profile of the vehicle in operation on the adjustment portion of the route, and wherein the estimated speed profile of the vehicle in operation contains the second preferred speed range for the vehicle in operation generated in such a way that when the vehicle in operation is moving at any of the speeds from the second preferred speed range, its speed at the start coordinates of the portion of the route, for which the main energy-efficient track for the vehicle in operation was generated, matches any of the speeds from the first preferred speed range for the vehicle in operation; preferably, but not limited to, the main energy-efficient track for the vehicle in operation contains at least an estimated speed profile of the vehicle in operation on the portion of the route, for which the main energy-efficient track for the vehicle in operation was generated. Preferably, but not limited to, the estimated speed profile of the vehicle in operation on the portion of the route, for which the main energy-efficient track for the vehicle in operation was generated, contains at least the first preferred speed range for the vehicle in operation on the portion of the route, for which the main energy-efficient track for the vehicle in operation was generated. Preferably, but not limited to, a such first speed range for the vehicle in operation is selected, so as to ensure that its movement is energy efficient, as was demonstrated above with reference to Figs. 1-8. At the same time, it should be obvious to a person having ordinary skill in the art that the first speed range is generated, preferably, but not limited to, in the step of generating the main energy-efficient track for any first motor vehicle, including, respectively, the speed profile of the corresponding first motor vehicle and the evaluation of energy efficiency of the first motor vehicle on the corresponding portion of the route; wherein the speed profile of the first motor vehicle may also contain any speed range for the first motor vehicle which may be evaluated as energy efficient and used to generate the main energy-efficient track for the vehicle in operation, as was demonstrated above with reference to Figs. 1-8. Preferably, but not limited to, when determining the current location of the vehicle in operation, it may be found that the current location of the vehicle in operation does not match its estimated location on the portion of the route, which may indicate at least that the actual track of the vehicle in operation does not conform to the main energy-efficient track for the vehicle in operation, which was generated as was disclosed above with reference to Figs. 1-8. For example, but not limited to, this may happen because the vehicle in operation needed an emergency stop on the portion of the route or, but not limited to, because of any change in the speed of the vehicle in operation that does not conform to its speed profile contained in the main energy-efficient track for the vehicle in operation. In this case, the actual speed profile of the vehicle in operation in the stop point (as well as in any respective point of any other unacceptable, i.e., not conforming to the estimated speed profile, change in the speed of the vehicle in operation) will not conform to the speed profile contained in the main energy-efficient track for the vehicle in operation. At the same time, if the point of unexpected change in the speed of the vehicle in operation does not appear frequently on portions of the route in actual tracks for aforementioned first motor vehicles, it is almost impossible to pre-generate an energy-efficient track for the vehicle in operation that would include a change in speed in said point. More specifically, but not limited to, the most frequent points of change in speed on portions of the route in actual tracks for aforementioned first motor vehicles may include: a checkpoint, a parking lot entrance or exit, a gas station entrance or exit, a ramp, an intersection, a long obstacle, or a similar point on a portion of the route. For such frequent points, it is possible to obtain enough data to generate an energy-efficient track for the vehicle in operation that would include shifting from the energy-efficient track of the vehicle in operation to a corresponding energy-efficient track that includes a portion between the portion of the route from the main energy-efficient track for the vehicle in operation and an aforementioned frequent point, and then shifting to a corresponding energy-efficient track that includes a portion between the aforementioned frequent point and the portion of the route from the main energy-efficient track. More specifically, but not limited to, the aforementioned point of unexpected change of the speed profile on a portion of the route from the main energy-efficient track of the vehicle in operation may be represented, but not limited to, a temporary (short-term) obstacle, a point on the road shoulder, a point of overtake, or any other point on the portion of the route, where the speed of the vehicle in operation lies outside the first preferred speed range for the vehicle in operation. When such points of unexpected change of the speed profile appear, preferably, but not limited to, an adjustment energy-efficient track for the vehicle in operation is generated, which is an energy-efficient track for the vehicle in operation, specially calculated so that the vehicle in operation could shift back to its main energy-efficient track with required energy efficiency. In fact, but not limited to, a special energy-efficient track will be calculated for the given vehicle in operation, as if said vehicle in operation were the first motor vehicle, i.e., simply speaking, the adjustment energy-efficient track is generated according to the step 101. At the same time, but not limited to, the vehicle in operation has already got pre-generated energy-efficient track, which is, therefore, the main energy-efficient track for the given vehicle in operation, i.e. the adjustment energy-efficient track has to be generated in such a way that it fully conforms to the main pre-generated energy-efficient track for the vehicle in operation in the specified point of the portion of the route from the main energy-efficient track for the vehicle in operation. Preferably, but not limited to, the step 301 of generating an adjustment energy-efficient track for the vehicle in operation is performed, the step, preferable, but not limited to, comprising (see Fig. 9) a step 3011 of determining the current location of the vehicle in operation; a step 3012 of determining an adjustment portion of the route; a step 3013 of collecting primary adjustment data; and a step 3014 of generating an adjustment energy-efficient track. Preferably, but not limited to, the adjustment energy-efficient track is generated based on the main energy-efficient track for the vehicle in operation. Preferably, but not limited to, in step 3011, the current location of the vehicle in operation is determined, wherein the current location of the vehicle in operation does not match its estimated location on the portion of the route, which signals that this location is a point of unexpected change of the speed profile of the vehicle in operation. Preferably, but not limited to, in step 3012, an adjustment portion of the route is determined, wherein its start coordinates match the current location of the vehicle in operation and its end coordinates match the start coordinates of the portion of the route, for which the main energy-efficient track for the vehicle in operation was generated; and wherein the start coordinates of the portion of the route, for which the main energy-efficient track for the vehicle in operation was generated are located in the vehicle in operation's direction of movement. Preferably, but not limited to, in step 3013, primary adjustment data are collected, which involves obtaining data associated with the vehicle in operation and data associated with the adjustment portion of the route. Preferably, but not limited to, such primary adjustment data generally match the primary data collected in step 101, apart from the fact that these data are collected for the vehicle in operation (which is, in this case, considered to be the first motor vehicle) and the adjustment portion of the route, respectively. Preferably, but not limited to, in step 3014, an adjustment energy-efficient track for the vehicle in operation is generated, wherein the adjustment energy-efficient track for the vehicle in operation contains at least an estimated speed profile of the vehicle in operation on the adjustment portion of the route; and wherein the estimated speed profile of the vehicle in operation contains the second preferred speed range for the vehicle in operation generated in such a way that when the vehicle in operation is moving at any of the speeds from the second preferred speed range, its speed at the start coordinates of the portion of the route, for which the main energy-efficient track for the vehicle in operation was generated, matches any of the speeds from the first preferred speed range for the vehicle in operation.

Therefore, but not limited to, when the vehicle in operation moves from any point of unexpected change in the speed profile, there may be generated an adjustment energy-efficient track for the vehicle in operation, which may then be sent to the computer device 2022 of the motion control system 202 of the vehicle in operation or to the computer device (on-board information system, if present) 2023 of the vehicle in operation, and after that the adjustment energy-efficient track will be stored in a corresponding memory to be used alongside the energy-efficient track of the vehicle in operation, until the vehicle in operation starts moving again in accordance with its main energy-efficient track. For example, but not limited to, the adjustment energy-efficient track generated may be used to generate control signals for the motion control system of the vehicle in operation in order to change its movement. For example, but not limited to, the adjustment energy-efficient track may be used to generate control signals for an on-board information system of the vehicle in operation, to generate an information signal for the operator of the vehicle in operation, and, but not limited to, to send this information signal to any user device of the operator. At the same time, it should be obvious to a person having ordinary skill in the art that the method 300 for generating an adjustment energy-efficient track for the vehicle in operation may be implemented using the means and methods of the system 200 for generating an energy-efficient track, described above with reference to Figs. 1-8, which will function as a system for generating an energy-efficient track as well, and therefore its components and their functionality won't be described in further detail.

The present disclosure of the claimed invention demonstrates only certain exemplary embodiments of the invention as defined by the claims.

## Claims

1. A method for generating an adjustment energy-efficient track for the vehicle in operation, that is performed by the CPU of the computer device, the method comprising at least a step of generating an energy-efficient track for the vehicle in operation, wherein the adjustment energy-efficient track is generated based on the main energy-efficient track for the vehicle in operation, wherein the main energy-efficient track for the vehicle in operation contains at least an estimated speed profile of the vehicle in operation on the portion of the route, for which the main energy-efficient track for the vehicle in operation was generated, and wherein the estimated speed profile of the vehicle in operation on the portion of the route, for which the main energy-efficient track for the vehicle in operation was generated, contains at least the first preferred speed range for the vehicle in operation on the portion of the route, for which the main energy-efficient track for the vehicle in operation was generated;
and wherein the step of generating an adjustment energy-efficient track comprises at least the following steps:
determining the current location of the vehicle in operation, wherein the current location of the vehicle in operation does not correspond to its estimated location on the portion of the route;
determining an adjustment portion of the route, wherein its start coordinates match the current location of the vehicle in operation and its end coordinates match the start coordinates of the portion of the route, for which the main energy-efficient track for the vehicle in operation was generated, and wherein the start coordinates of the portion of the route, for which the main energy-efficient track for the vehicle in operation was generated, are located in the vehicle in operation's direction of movement;
collecting primary adjustment data, which involves obtaining data associated with the vehicle in operation and data associated with the adjustment portion of the route;
and generating an adjustment energy-efficient track for the vehicle in operation, wherein the adjustment energy-efficient track for the vehicle in operation contains at least an estimated speed profile of the vehicle in operation on the adjustment portion of the route, and wherein the estimated speed profile of the vehicle in operation contains the second preferred speed range for the vehicle in operation generated in such a way that when the vehicle in operation is moving at any of the speeds from the second preferred speed range, its speed at the start coordinates of the portion of the route, for which the main energy-efficient track for the vehicle in operation was generated, matches any of the speeds from the first preferred speed range for the vehicle in operation.

2. The method of claim 1, **characterized in that** the main energy-efficient track for the vehicle in operation is generated by means of the CPU of the computer device implementing the method for generating an energy-efficient track for the motor vehicle, the method comprising the following steps:
collecting primary data that involves obtaining data associated with the first motor vehicle, data associated with the portion of the route to be passed by the first motor vehicle, and data associated with the vehicle in operation, wherein the vehicle in operation passes the portion of the route after the first motor vehicle;
collecting secondary data that involves generating a track of the first motor vehicle, wherein said track is generated based on how the first motor vehicle passed the portion of the route;
and generating the main energy-efficient track for the vehicle in operation, wherein the energy-efficient track for the vehicle in operation is generated based on the track generated for the first motor vehicle, wherein the track for the first motor vehicle is generated by performing the following steps:
generating a speed profile of the first motor vehicle on the passed portion of the route;
evaluating energy efficiency of the first motor vehicle on the passed portion of the route;
wherein the main energy-efficient track for the vehicle in operation contains at least an estimated speed profile of the vehicle in operation on the portion of the route, for which the main energy-efficient track for the vehicle in operation was generated, and
wherein the estimated speed profile of the vehicle in operation on the portion of the route, for which the main energy-efficient track for the vehicle in operation was generated, contains at least the first preferred speed range for the vehicle in operation on the portion of the route, for which the main energy-efficient track for the vehicle in operation was generated.

3. The method of claim 2, **characterized in that** the data associated with the first motor vehicle include at least one of the following: the type and model of the first motor vehicle, its mass, its aerodynamic characteristics, its wheel formula, its estimated and/or actual energy consumption and data from its acceleration sensors and/or speed sensors, data from its positioning sensors, weight sensors, and wheel speed sensors, and/or a combination thereof; the data associated with the vehicle in operation include at least one of the following: the type and model of the vehicle in operation, its mass, its aerodynamic characteristics, its wheel formula, its estimated and/or actual energy consumption and data from its acceleration sensors and/or speed sensors, data from its positioning sensors, weight sensors, and wheel speed sensors, and/or a combination thereof; and the data associated with the portion of the route to be passed by the first motor vehicle include at least one of the data of the portion of the route to be passed by the first motor vehicle, obtained from external sources, and/or a combination thereof: the geometry of the portion of the route, the road grade of the portion of the route, the allowed speed on the portion of the route, the quality of road surface of the portion of the route, speed limits on the portion of the route, turns on the portion of the route, weather conditions on the portion of the route, or its infrastructure.

4. The method of claim 2, **characterized in that** the track for the first motor vehicle is generated by performing the following additional steps:
refining the primary data associated with the first motor vehicle based on how it passed the portion of the route;
refining the primary data associated with the portion of the route based on how it was passed by the first motor vehicle;
wherein the refining of the primary data associated with the portion of the route is also based on the data obtained from the environmental sensors of the first motor vehicle.

5. The method of claim 2, **characterized in that** the primary data associated with the first motor vehicle and the primary data associated with the portion of the route form an estimated track for the first motor vehicle, wherein such estimated track further contains an estimated speed profile of the first motor vehicle.

6. The method of claim 5, **characterized in that** the estimated track for the first motor vehicle contains estimated acceleration points and/or deceleration points on the portion of the road; the track generated for the first motor vehicle further contains actual acceleration points and/or deceleration points determined based on how the first motor vehicle passed the given portion of the route; wherein the track generated for the first motor vehicle further contains the data on mismatches between the actual acceleration points and/or deceleration points and respective estimated acceleration points and/or deceleration points on the portion of the route; wherein the step of generating a track for the first motor vehicle further comprises a step of obtaining actual data on energy consumption by the first motor vehicle on the portion of the route; wherein the step of evaluating the energy efficiency of how the first motor vehicle passed the portion of the route involves comparing the estimated data on energy consumption by the first motor vehicle on the portion of the route with the actual data on energy consumption by the first motor vehicle on the portion of the route; and wherein the estimated data on energy consumption by the first motor vehicle on the portion of the route are compared with the actual data on energy consumption by the first motor vehicle on the portion of the route taking into account the speed profile generated for the first motor vehicle.

7. A computer device for generating an adjustment energy-efficient track for the vehicle in operation, comprising at least:
a CPU;
a memory that stores a program code that, when executed, induces the CPU to perform steps according to the method for generating an adjustment energy-efficient track for the vehicle in operation according to any of claims 1-6.

8. A motor vehicle comprising at least:
a moving device;
an engine that is connected to and actuates the moving device;
a motion control system that is adapted to control the engine of the motor vehicle, the system comprising at least:
a computer device according to claim 7.

9. A non-transitory computer-readable medium that stores a program code that, when executed by a CPU of a computer device, induces the CPU to perform steps according to the method for generating an adjustment energy-efficient track for the vehicle in operation, according to any of claims 1-6.

## Patentansprüche

1. Verfahren zum Erzeugen eines angepassten energieeffizienten Fahrwegs für das Fahrzeug in Betrieb, das von der CPU der Computervorrichtung durchgeführt wird, wobei das Verfahren mindestens einen Schritt des Erzeugens eines energieeffizienten Fahrwegs für das Fahrzeug in Betrieb umfasst, wobei der angepasste energieeffiziente Fahrweg auf Grundlage des energieeffizienten Hauptfahrwegs für das Fahrzeug in Betrieb erzeugt wird, wobei der energieeffiziente Hauptfahrweg für das Fahrzeug in Betrieb mindestens ein geschätztes Geschwindigkeitsprofil des Fahrzeugs in Betrieb auf dem Streckenabschnitt umfasst, für den der energieeffiziente Hauptfahrweg für das Fahrzeug in Betrieb erzeugt wurde, und wobei das geschätzte Geschwindigkeitsprofil des Fahrzeugs in Betrieb auf dem Streckenabschnitt, für den der energieeffiziente Hauptfahrweg für das Fahrzeug in Betrieb erzeugt wurde, mindestens den ersten bevorzugten Geschwindigkeitsbereich für das Fahrzeug in Betrieb auf dem Streckenabschnitt, für den der energieeffiziente Hauptfahrweg für das Fahrzeug in Betrieb erzeugt wurde, umfasst;
und wobei der Schritt des Erzeugens eines angepassten energieeffizienten Fahrwegs mindestens die folgenden Schritte umfasst:
Feststellen des aktuellen Standorts des Fahrzeugs in Betrieb, wobei der aktuelle Standort des Fahrzeugs in Betrieb nicht seinem geschätzten Standort auf dem Streckenabschnitt entspricht,
Feststellen eines angepassten Streckenabschnitts, wobei dessen Startkoordinaten dem aktuellen Standort des Fahrzeugs in Betrieb entsprechen und seine Endkoordinaten den Startkoordinaten des Streckenabschnitts entsprechen, für den der energieeffiziente Hauptfahrweg für das Fahrzeug in Betrieb erzeugt wurde, und wobei die Startkoordinaten des Streckenabschnitts, für den der energieeffiziente Hauptfahrweg für das Fahrzeug in Betrieb erzeugt wurde, sich in Bewegungsrichtung des Fahrzeugs in Betrieb befinden;
Erfassen von primären Anpassungsdaten, was das Erhalten von Daten zum Fahrzeug in Betrieb sowie von Daten zum angepassten Streckenabschnitt einschließt;
und Erzeugen eines angepassten energieeffizienten Fahrwegs für das Fahrzeug in Betrieb, wobei der angepasste energieeffiziente Fahrweg für das Fahrzeug in Betrieb mindestens ein geschätztes Geschwindigkeitsprofil des Fahrzeugs in Betrieb auf dem angepassten Streckenabschnitt enthält, und wobei das geschätzte Geschwindigkeitsprofil des Fahrzeugs in Betrieb den zweiten bevorzugten Geschwindigkeitsbereich für das Fahrzeug in Betrieb enthält, der auf jene Weise erzeugt wird, dass wenn sich das Fahrzeug in Betrieb bei einer beliebigen Geschwindigkeit des zweiten bevorzugten Geschwindigkeitsbereichs bewegt, seine Geschwindigkeit an den Startkoordinaten des Streckenabschnitts, für den der energieeffiziente Hauptfahrweg für das Fahrzeug in Betrieb erzeugt wurde, einer der Geschwindigkeiten aus dem ersten bevorzugten Geschwindigkeitsbereich für das Fahrzeug in Betrieb entspricht.

2. Verfahren nach Anspruch 1, **dadurch gekennzeichnet, dass** der energieeffiziente Hauptfahrweg für das Fahrzeug in Betrieb mittels der CPU der Computervorrichtung, die das Verfahren zum Erzeugen eines energieeffizienten Fahrwegs für das Kraftfahrzeug umsetzt, erzeugt wird, wobei das Verfahren die folgenden Schritte umfasst:
Erfassen von primären Daten, was das Erhalten von Daten zum ersten Kraftfahrzeug und Daten zum von dem ersten Kraftfahrzeug zu passierenden Streckenabschnitt einschließt, sowie Daten zum Fahrzeug in Betrieb, wobei das Fahrzeug in Betrieb den Streckenabschnitt nach dem ersten Kraftfahrzeug passiert;
Erfassen von sekundären Daten, was das Erzeugen eines Fahrwegs des ersten Kraftfahrzeugs einschließt, wobei das Erzeugen des Fahrwegs auf Grundlage davon ausgeführt wird, wie das erste Kraftfahrzeug den Streckenabschnitt passiert hat;
und Erzeugen des energieeffizienten Hauptfahrwegs für das Fahrzeug in Betrieb, wobei der energieeffiziente Fahrweg für das Fahrzeug in Betrieb auf Grundlage des für das erste Kraftfahrzeug erzeugten Fahrwegs erzeugt wird, wobei der Fahrweg für das erste Kraftfahrzeug durch Ausführen der folgenden Schritte erzeugt wird:
Erzeugen eines Geschwindigkeitsprofils des ersten Kraftfahrzeugs auf dem passierten Streckenabschnitt;
Evaluieren einer Energieeffizienz des ersten Kraftfahrzeugs auf dem passierten Streckenabschnitt;
wobei der energieeffiziente Hauptfahrweg für das Fahrzeug in Betrieb mindestens ein geschätztes Geschwindigkeitsprofil des Fahrzeugs in Betrieb auf dem Streckenabschnitt, für den der energieeffiziente Hauptfahrweg für das Fahrzeug in Betrieb erzeugt wurde, umfasst
und
wobei das geschätzte Geschwindigkeitsprofil des Fahrzeugs in Betrieb auf dem Streckenabschnitt, für den der energieeffiziente Hauptfahrweg für das Fahrzeug in Betrieb erzeugt wurde, mindestens den ersten bevorzugten Geschwindigkeitsbereich für das Fahrzeug in Betrieb auf dem Streckenabschnitt, für den der energieeffiziente Hauptfahrweg für das Fahrzeug in Betrieb erzeugt wurde, umfasst.

3. Verfahren nach Anspruch 2, **dadurch gekennzeichnet, dass** die Daten zum ersten Kraftfahrzeug mindestens eines der folgenden umfassen: die Art und den Typ des ersten Kraftfahrzeugs, dessen Masse, dessen aerodynamische Eigenschaften, dessen Radformel, dessen geschätzter und/oder tatsächlicher Energieverbrauch sowie Daten von dessen Beschleunigungssensoren und/oder Geschwindigkeitssensoren, Daten von dessen Positionssensoren, Gewichtssensoren und Radgeschwindigkeitssensoren und/oder eine Kombination davon; die Daten zum Fahrzeug in Betrieb umfassen mindestens eines der folgenden: die Art und den Typ des Fahrzeugs in Betrieb, dessen Masse, dessen aerodynamische Eigenschaften, dessen Radformel, dessen geschätzter und/oder tatsächlicher Energieverbrauch sowie Daten von dessen Beschleunigungssensoren und/oder Geschwindigkeitssensoren, Daten von dessen Positionssensoren, Gewichtssensoren und Radgeschwindigkeitssensoren und/oder eine Kombination davon; und die Daten zum durch das erste Kraftfahrzeug zu passierenden Streckenabschnitt umfassen mindestens eines von den Daten des durch das erste Kraftfahrzeug zu passierenden Streckenabschnitts, erhalten aus externen Quellen und/oder eine Kombination der folgenden: die Geometrie des Streckenabschnitts, die Straßensteigung des Streckenabschnitts, die zulässige Geschwindigkeit auf dem Streckenabschnitt, die Qualität der Straßenfahrbahn auf dem Streckenabschnitt, Geschwindigkeitsbegrenzungen auf dem Streckenabschnitt, Kurven auf dem Streckenabschnitt, die Wetterbedingungen auf dem Streckenabschnitt oder dessen Infrastruktur.

4. Verfahren nach Anspruch 2, **dadurch gekennzeichnet, dass** der Fahrweg für das erste Kraftfahrzeug durch Ausführen der folgenden zusätzlichen Schritte erzeugt wird:
Optimieren der primären Daten zum ersten Kraftfahrzeug auf Grundlage davon, wie es den Streckenabschnitt passiert hat;
Optimieren der primären Daten zum Streckenabschnitt auf Grundlage davon, wie er von dem ersten Kraftfahrzeug passiert wurde;
wobei das Optimieren der primären Daten zum Streckenabschnitt auch auf Grundlage der von den Umgebungssensoren des ersten Kraftfahrzeugs erhaltenen Daten durchgeführt wird.

5. Verfahren nach Anspruch 2, **dadurch gekennzeichnet, dass** die primären Daten zum ersten Kraftfahrzeug und die primären Daten zum Streckenabschnitt einen geschätzten Fahrweg für das erste Kraftfahrzeug bilden, wobei dieser geschätzte Fahrweg ferner ein geschätztes Geschwindigkeitsprofil des ersten Kraftfahrzeugs enthält.

6. Verfahren nach Anspruch 5, **dadurch gekennzeichnet, dass** der geschätzte Fahrweg für das erste Kraftfahrzeug geschätzte Beschleunigungsstellen und/oder Verlangsamungsstellen auf dem Streckenabschnitt enthält; der für das erste Kraftfahrzeug erzeugte Fahrweg ferner tatsächliche Beschleunigungsstellen und/oder Verlangsamungsstellen, die auf Grundlage davon, wie das erste Kraftfahrzeug den gegebenen Streckenabschnitt passiert hat, festgestellt werden, enthält; wobei der für das erste Kraftfahrzeug erzeugte Fahrweg ferner Daten zu Abweichungen zwischen den tatsächlichen Beschleunigungsstellen und/oder Verlangsamungsstellen und den entsprechenden geschätzten Beschleunigungsstellen und/oder Verlangsamungsstellen auf dem Streckenabschnitt enthält; wobei der Schritt des Erzeugens eines Fahrwegs für das erste Kraftfahrzeug ferner einen Schritt des Erhaltens von Ist-Daten zum Energieverbrauch des ersten Kraftfahrzeugs auf dem Streckenabschnitt umfasst; wobei der Schritt des Evaluierens der Energieeffizienz, mit der das erste Kraftfahrzeug den Streckenabschnitt passiert hat, den Vergleich der geschätzten Daten zum Energieverbrauch des ersten Kraftfahrzeugs auf dem Streckenabschnitt mit den Ist-Daten zum Energieverbrauch des ersten Kraftfahrzeugs auf dem Streckenabschnitt einschließt; und wobei die geschätzten Daten zum Energieverbrauch des ersten Kraftfahrzeugs auf dem Streckenabschnitt mit den Ist-Daten zum Energieverbrauch des ersten Kraftfahrzeugs auf dem Streckenabschnitt verglichen werden, unter Berücksichtigung des für das erste Kraftfahrzeug erzeugten Geschwindigkeitsprofils.

7. Computervorrichtung zum Erzeugen eines angepassten energieeffizienten Fahrwegs für das Fahrzeug in Betrieb, umfassend mindestens:
eine CPU;
einen Speicher, der einen Programmcode speichert, der beim Ausführen die CPU veranlasst, Schritte gemäß dem Verfahren zum Erzeugen eines angepassten energieeffizienten Fahrwegs für das Fahrzeug in Betrieb gemäß einem der Ansprüche 1 bis 6 auszuführen.

8. Kraftfahrzeug, umfassend mindestens:
eine Bewegungsvorrichtung;
einen Motor, der mit der Bewegungsvorrichtung verbunden ist und diese antreibt;
ein Bewegungssteuerungssystem, das dazu ausgelegt ist, den Motor des Kraftfahrzeugs zu steuern, wobei das System mindestens umfasst:
eine Computervorrichtung nach Anspruch 7.

9. Nichtflüchtiges, computerlesbares Medium, das einen Programmcode speichert, der, wenn er von einer CPU einer Computervorrichtung ausgeführt wird, die CPU veranlasst, Schritte gemäß dem Verfahren zum Erzeugen eines angepassten energieeffizienten Fahrwegs für das Fahrzeug in Betrieb gemäß einem der Ansprüche 1 bis 6 auszuführen.

## Revendications

1. Procédé destiné à générer une voie d'ajustement économe en énergie pour le véhicule en service, mis en œuvre par la CPU du dispositif informatique, le procédé comprenant au moins une étape de génération d'une voie économe en énergie pour le véhicule en service, dans lequel la voie d'ajustement économe en énergie est générée sur la base de la voie économe en énergie principale pour le véhicule en service, dans lequel la voie économe en énergie principale pour le véhicule en service contient au moins un profil de vitesse estimé du véhicule en service sur la portion de la route pour laquelle la voie économe en énergie principale pour le véhicule en service a été générée, et dans lequel le profil de vitesse estimé du véhicule en service sur la portion de la route pour laquelle la voie principale économe en énergie pour le véhicule en service a été générée contient au moins la première plage de vitesses préférée pour le véhicule en service sur la portion de la route pour laquelle la voie principale économe en énergie pour le véhicule en service a été générée ;
et dans lequel l'étape de génération d'une voie d'ajustement économe en énergie comprend au moins les étapes suivantes :
détermination de la position actuelle du véhicule en service, la position actuelle du véhicule en service ne correspondant pas à sa position estimée sur la portion de la route,
détermination d'une portion d'ajustement de la route, dans laquelle ses coordonnées de départ correspondent à la position actuelle du véhicule en service et ses coordonnées d'arrivée correspondent aux coordonnées de départ de la portion de la route pour laquelle la voie principale économe en énergie du véhicule en service a été générée, et dans laquelle les coordonnées de départ de la portion de la route pour laquelle la voie principale économe en énergie du véhicule en service a été générée se situent dans le sens de déplacement du véhicule en service ;
collection de données d'ajustement primaires, ce qui implique l'obtention de données relatives au véhicule en service et de données relatives à la portion d'ajustement de la route ; et génération d'une voie d'ajustement économe en énergie pour le véhicule en service, dans laquelle la voie d'ajustement économe en énergie pour le véhicule en service contient au moins un profil de vitesse estimé du véhicule en service sur la portion d'ajustement de la route, et dans laquelle le profil de vitesse estimé du véhicule en service contient la deuxième plage de vitesses préférée pour le véhicule en service, générée de telle sorte que, lorsque le véhicule en service se déplace à l'une quelconque des vitesses de la deuxième plage de vitesses préférée, sa vitesse aux coordonnées de départ de la portion de la route pour laquelle la voie principale économe en énergie pour le véhicule en service a été générée, corresponde à l'une quelconque des vitesses de la première plage de vitesses préférée pour le véhicule en service.

2. Procédé selon la revendication 1, **caractérisé en ce que** la voie principale économe en énergie pour le véhicule en service est générée au moyen de la CPU du dispositif informatique mettant en œuvre le procédé de génération d'une voie économe en énergie pour le véhicule automobile, le procédé comprenant les étapes suivantes :
collection de données primaires, qui consiste à obtenir des données relatives au premier véhicule automobile, des données relatives à la portion de la route que doit parcourir le premier véhicule automobile, et des données relatives au véhicule en service, le véhicule en service parcourant la portions de la route après le premier véhicule automobile ;
collection de données secondaires, qui consiste à générer une voie du premier véhicule automobile, dans laquelle ladite voie est générée en se basant sur la façon dont le premier véhicule automobile a parcouru la portions de la route ;
et génération de la voie principale économe en énergie pour le véhicule en service, dans laquelle la voie économe en énergie pour le véhicule en service est générée sur la base de la voie générée pour le premier véhicule automobile, la voie pour le premier véhicule automobile étant générée en effectuant les étapes suivantes :
génération d'un profil de vitesse du premier véhicule automobile sur la portion de la route parcourue ;
évaluation de l'efficacité énergétique du premier véhicule automobile sur la portion de la route parcourue ;
dans lequel la voie principale économe en énergie pour le véhicule en service contient au moins un profil de vitesse estimé du véhicule en service sur la portion de la route pour laquelle la voie principale économe en énergie pour le véhicule en service a été générée, et
dans lequel le profil de vitesse estimé du véhicule en service sur la portion de la route pour laquelle la voie principale économe en énergie du véhicule en service a été générée contient au moins la première plage de vitesses préférée pour le véhicule en service sur la portion de la route pour laquelle la voie principale économe en énergie du véhicule en service a été générée.

3. Procédé selon la revendication 2, **caractérisé en ce que** les données relatives au premier véhicule automobile comprennent au moins l'un des éléments suivants : le type et le modèle du premier véhicule automobile, sa masse, ses caractéristiques aérodynamiques, sa configuration des roues, sa consommation d'énergie estimée et/ou réelle, ainsi que les données provenant de ses capteurs d'accélération et/ou de vitesse, de ses capteurs de position, de ses capteurs de poids et de ses capteurs de vitesse de roue, et/ou une combinaison de ceux-ci ; les données relatives au véhicule en service comprennent au moins l'un des éléments suivants : le type et le modèle du véhicule en service, sa masse, ses caractéristiques aérodynamiques, sa configuration des roues, sa consommation d'énergie estimée et/ou réelle et les données provenant de ses capteurs d'accélération et/ou de vitesse, les données provenant de ses capteurs de position, de ses capteurs de poids et de ses capteurs de vitesse de roue, et/ou une combinaison de ceux-ci ; et les données relatives à la portion de la route que le premier véhicule automobile doit parcourir comprennent au moins l'une des données relatives à la portion de la route que le premier véhicule automobile doit parcourir, obtenues à partir de sources externes, et/ou une combinaison de celles-ci : la géométrie de la portion de la route, la pente de la portion de la route, la vitesse autorisée sur la portion de la route, la qualité du revêtement routier de la portion de la route, les limitations de vitesse sur la portion de la route, les virages sur la portion de la route, les conditions météorologiques sur la portion de la route, ou son infrastructure.

4. Procédé selon la revendication 2, **caractérisé en ce que** la voie pour le premier véhicule automobile est générée en effectuant les étapes supplémentaires suivantes :
affinement des données primaires relatives au premier véhicule automobile en fonction de la manière dont il a parcouru cette portion de la route ;
affinement des données primaires relatives à la portion de la route en fonction de la manière dont celle-ci a été parcourue par le premier véhicule automobile ;
dans lequel l'affinement des données primaires relatives à la portion de la route est également basé sur les données obtenues à partir des capteurs environnementaux du premier véhicule automobile.

5. Procédé selon la revendication 2, **caractérisé en ce que** les données primaires relatives au premier véhicule automobile et les données primaires relatives à la portion de la route forment une voie estimée pour le premier véhicule automobile, dans lequel une telle voie estimée contient en outre un profil de vitesse estimé du premier véhicule automobile.

6. Procédé selon la revendication 5, **caractérisé en ce que** la voie estimée pour le premier véhicule automobile contient des points d'accélération et/ou des points de décélération estimés sur la portion de la route ; la voie générée pour le premier véhicule automobile contient en outre des points d'accélération et/ou de décélération réels déterminés en fonction de la manière dont le premier véhicule automobile a parcouru la portion donnée de la route ; dans lequel la voie générée pour le premier véhicule automobile contient en outre les données relatives aux écarts entre les points d'accélération et/ou de décélération réels et les points d'accélération et/ou de décélération estimés respectifs sur la portion de la route ; dans lequel l'étape de génération d'une voie pour le premier véhicule automobile comprend en outre une étape consistant à obtenir des données réelles sur la consommation d'énergie du premier véhicule automobile sur la portion de la route ; dans lequel l'étape d'évaluation de l'efficacité énergétique de la manière dont le premier véhicule automobile a parcouru la portion de la route implique de comparer les données estimées sur la consommation d'énergie du premier véhicule automobile sur la portion de la route avec les données réelles sur la consommation d'énergie du premier véhicule automobile sur la portion de la route ; et dans lequel les données estimées sur la consommation d'énergie du premier véhicule automobile sur la portion de la route sont comparées aux données réelles sur la consommation d'énergie du premier véhicule automobile sur la portion de la route en tenant compte du profil de vitesse généré pour le premier véhicule automobile.

7. Dispositif informatique destiné à générer une voie d'ajustement économe en énergie pour un véhicule en service, comprenant au moins :
une CPU ;
une mémoire qui stocke un code de programme qui, lorsqu'il est exécuté, amène la CPU à effectuer des étapes conformément au procédé destiné à générer une voie d'ajustement économe en énergie pour un véhicule en service selon l'une quelconque des revendications 1 à 6.

8. Véhicule automobile comprenant au moins :
un dispositif de déplacement ;
un moteur relié au dispositif de déplacement et actionnant celui-ci ;
un système de commande de déplacement adapté pour commander le moteur du véhicule automobile, le système comprenant au moins :
un dispositif informatique selon la revendication 7.

9. Support lisible par ordinateur, non éphémère, sur lequel est stocké un code de programme qui, lorsqu'il est exécuté par la CPU d'un dispositif informatique, amène cette CPU à exécuter les étapes correspondant au procédé destiné à générer une voie d'ajustement économe en énergie pour le véhicule en service, selon l'une quelconque des revendications 1 à 6.
